# EUROPEAN PATENT APPLICATION

(11) **EP 1 032 159 A2**
(43) Date of publication of application: **30.08.2000**
(21) Application number: 99120498.3
(22) Date of filing: 15.10.1999
(51) Int. Cl.: H04L 9/08

(54) **Method for information encryption and transfer**

(30) Priority: 23.02.1999 US 255837
(71) Applicant: Johnson, R. Brent, Tulsa, Oklahoma 74103 (US)
(72) Inventor: Johnson, R. Brent, Tulsa, Oklahoma 74103 (US)
(74) Representative: Wood, Graham

(57) **Abstract**

A method for encoding and decoding information for electronic transfer through network computer systems. The invention increases the difficulty of code breaking by modifying the data stream in several different manners. First the data stream is compressed and partitioned into discreet components or segments. Then the partitioned data stream elements are each mixed in a sem-random manner to allow for transmission of the original information yet increase the difficulty of code breaking. In addition to mixing the data, an updated mixing variable is added to the information transmitted for each partition which is sent. This allows for the use of a mixing variable which is constantly evolving while transmitting and encrypting a data stream. A similar key and key variable are used for updating the encryption information that is being sent. This system also provides a method for decoding the information once it has been encoded and transmitted. One example of the present invention includes the data encoding and decoding method including a data compression system, a data mixing system, a data encryption system, a mixing variable updating signal, and an encryption key updating variable.

## Description

### Reference to Pending Applications

This application is a continuation-in-part co-pending U.S. Patent Application No. 08/892,982, filed 07/15/97, and entitled, COMBINED REMOTE ACCESS AND SECURITY SYSTEM, which is a continuation-in-part of U.S. Patent Application No. 08/752,249, filed 11/19/96, and entitled, COMBINED REMOTE ACCESS AND SECURITY SYSTEM, which are hereby incorporated by reference.

### Background of the Invention

### I. Field of the Invention

The present invention is directed to a method for encoding and decoding information for transfer. More particularly, the invention is directed for use in the electronic transfer of information through networked computer systems. The invention has utility and applications such as electronic mail communication, data transfer, and other electronic communication methods. The invention may be employed in data processing environments, in internal network environments, and in Internet environments.

### II. Prior Art

The use of high bit encryption systems is well known. However, the United States government has placed limitations on exporting high bit encryption technology, code, and information. This creates a communication problem because the increasing power and speed of today's computers have rendered low bit encryption techniques unreliable for secure data transmissions. In addition, prior art methods of distributing public keys for public/private key pairs can be compromised by third parties obtaining access codes into the public/private key system. Furthermore, system administrators can use the public/private key system to monitor and control the information flow through the computer system.

The increased use of E-mail has heightened the amount of information being exchanged electronically, and is continuing to expose people's personal information to outside parties. An additional problem exists, because current E-mail mailing systems allow for one party to send another party an E-mail with a third party's name attached thereto. Obviously, this could lead to serious problems and other confusion in the electronic transfer of information.

Thus, there is a need for a simple, yet robust, method for using low bit data encryption to create a highly secure information transmission system.

### Summary of the Invention

In accordance with the present invention, an improved method for encoding information is provided which addresses the drawbacks of prior art methods and devices. In an exemplary embodiment of the invention, the method includes encrypting, mixing, compressing, and updating both key and mixing variables during a data transmission stream.

The present system increases the difficulty of code breaking, by modifying the data stream in several different manners. First, the data stream is compressed and partitioned into discrete components or segments. Then, the partitioned data stream elements are each mixed in a random yet synchronous manner to allow for transmission of the original information, yet, increase the difficulty of code breaking. In addition to mixing the data, an updated mixing variable is added to the information transmitted for each partition which is sent. This allows for the use of a mixing variable which is constantly evolving while transmitting and encrypting a data stream. A similar key and key variable are used for updating the encrypting information that is being sent.

In accordance with one embodiment of the present invention, a data encoding and decoding method is provided including a data compression system, a data mixing system, a data encrypting system, a mixing variable updating signal, and an encrypting key updating variable.

Other objects and further scope of the applicability of the present invention will become apparent from the detailed description to follow, taken in conjunction with the accompanying drawings wherein like parts are designated by like reference numerals.

### Brief Description of the Drawings

Figure 1 is a flow chart representation of a preferred embodiment of a method for encoding information.

Figure 2 is a flow chart representation for a preferred embodiment for decoding the encoded information of Figure 1.

Figure 3 is a schematic view of the initial information given to a receiving unit.

Figure 4 is a schematic representation of an initial data stream.

Figure 5 is a schematic representation of the data stream of Figure 4 after compression.

Figure 6 is a schematic representation of the compressed data stream of Figure 5 which has been partitioned into discrete portions.

Figure 7 is a schematic view of the discrete portions of the data stream as shown in Figure 6 which have been subjected to a variable mixing.

Figure 8 is a schematic representation of the variable mixed compressed data stream of Figure 7 with an inserted updating key variable.

Figure 9 is a schematic view of the modified data stream of Figure 8 after encryption.

Figure 10 of the drawings displays how a 3-bit mixing variable can be added to a 5-bit signal to create an 8-bit mixed transmission signal.

Figure 11 illustrates a method for combining low-bit signals into a large-bit signal.

### Detailed Description Of The Preferred Embodiments

The following detailed description will describe an exemplary embodiment for encoding and then decoding information. Additionally, this description will include a walk through of an exemplary embodiment for encoding an initial data stream. While this embodiment lists the steps and procedures for implementing a preferred embodiment of this invention, the individual step limitations or order of performing these steps in not intended to limit the spirit and scope of this invention.

### Encoding Process Example

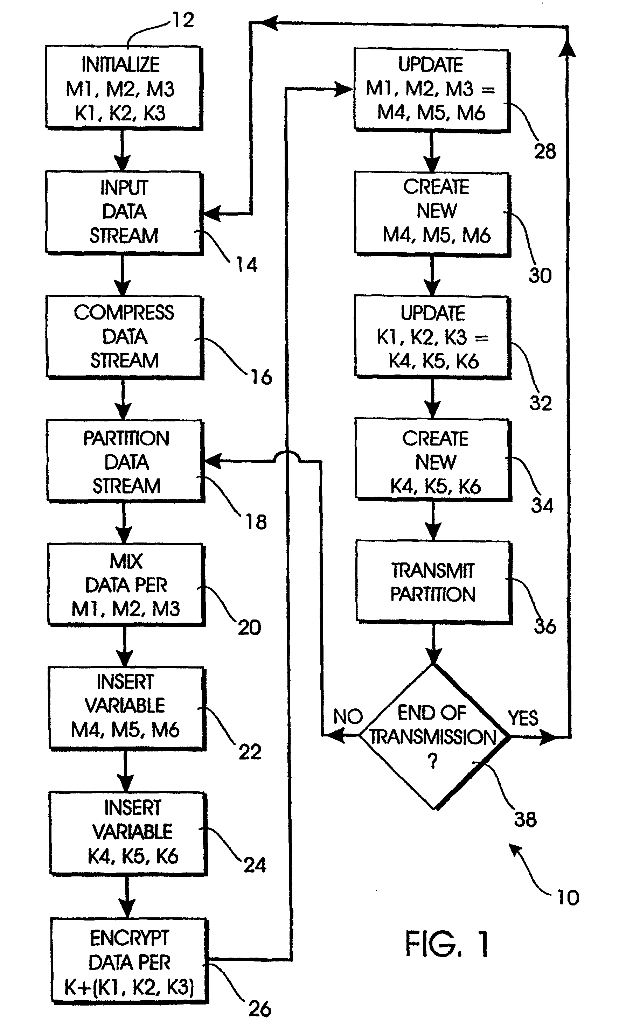

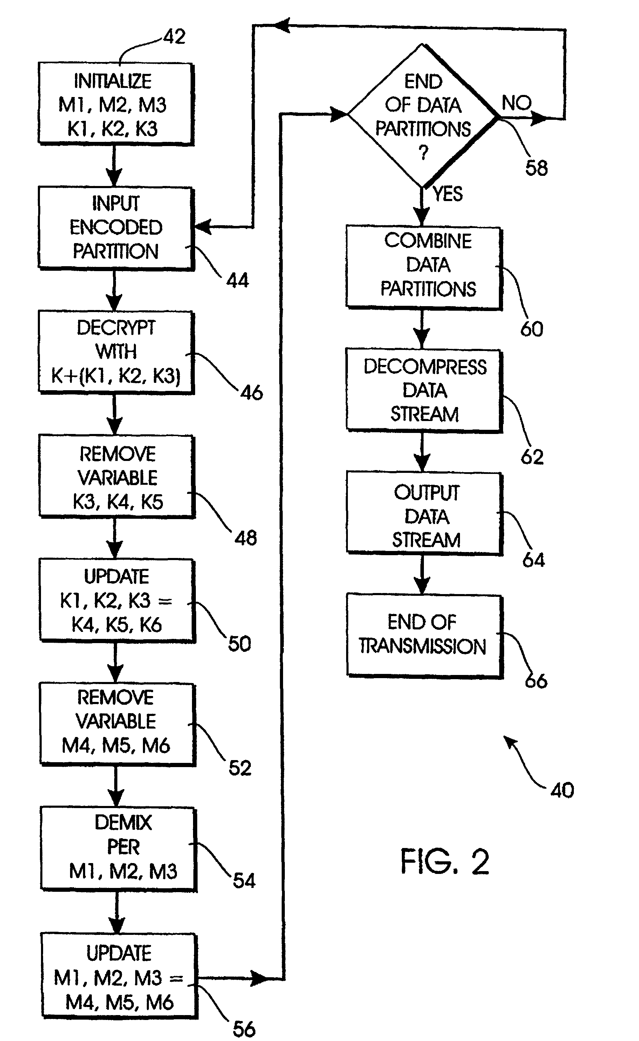

In accordance with the exemplary method of the present invention as shown by the flow charts in Figures 1 and 2, an encoding method is generally designated by the reference numeral 10. A corresponding method for decoding information is shown in Figure 2 by the reference numeral 40.

An original data message is programmed into both the sending and receiving central processing unit computers. This data message consists of a mixing signal, M1, M2, and M3, an initial updating key variable K1, K2, and K3, a base key K, and the systems to use these variables to mix or de-mix the data and encrypt or decrypt the transmitted data with the key signal and base key.

With reference to Figure 1 of the drawings, there is shown a flow chart of the basic embodiment of the encoding method of the present invention. The program will first initialize, as shown in block 12, the mixing and key updating variables. The program will then input the initial data stream 14, which will then be compressed 16 to a compressed data stream and partitioned 18 into discrete components of a partitioned data stream. The data will then be mixed 20 per the initial mixing variable to form a mixed data stream. The mixing variable or update code for the next data partition will then be inserted 22 into the data partition to form an updated mixed data stream. Additionally, the updating key information variable or update code will be inserted 24 into the partition data. The data will then be encrypted or encoded 26 per the initial key variable and base key.

The system will then update 28 the mixing variable, and create 30 a new mixing variable. Thereafter, the system will update 32 the key variable and create 34 a new key variable. The system will transmit 36 the partition information and then check 38 to see if it is at the end of the transmission. If the method is at the end of the transmission then it will wait for a new data stream to be input as shown at block 14. The process can then begin again.

If the method is not at the end of its transmission as shown in block 38, then the system will go to partitioning the next piece of information from the data stream as shown in block 18.

### Decoding Process Example

Figure 2 of the drawings shows a flow chart of the method of decoding the encoded information that has been encoded per the method of Figure 1. The system will initialize 42 the mixing variable, the key variable, and the base key values. The system will then input 44 an transmitted partition. In the preferred embodiment, this partition is changed by the method previously described. However, many variations of changing the original data stream are envisioned and this invention is not meant to be limited to only this example of decoding a transmitted partition. The system will decrypt as shown at box 46, the encrypted partition with the initial key variable. This is the base key, K, plus the initial key signal (K1, K2, and K3). The system will then remove 48 the updating key variable and update 50 its decrypting variable. The system will then remove 52 the mixing variable and de-mix 54 the input partition. Also, the system will update 56 the mixing variable.

The system will then check 58 to see if it is at the end of the data partitions.

If the system is not at the end of the data partitions then it will return to inputting 44 the next encoded partition.

If the system is at the end of the data partitions then it will combine or departition 60 the data partitions and decompress 62 the combined data partitions into a data stream. If only one data partition is received for the entire signal, then the departitioning is merely a check that the signal only consists of one partition. The system will then output 64 the data stream and go into its end of transmission 66 state where it will wait for the next encoded partition to begin the process again.

As shown in Figure 1 of the drawings, an original data message is programmed into both the sending and receiving computers. This data message consists of a mixing signal Ml, M2 and M3, and also an initial key signal, K1, K2 and K3 and a base key K. The initial mixing signal Ml, M2 and M3 will be used to demix the first mixed signal which is sent. The initial key signal K1, K2 and K3 will be used along with an initial key K or as an initial key variable to decrypt the first message that is sent. After the first signal has been transmitted, then the unit will use the last transmitted key signal and mixing signal as the initial value.

### Information Transmission Example

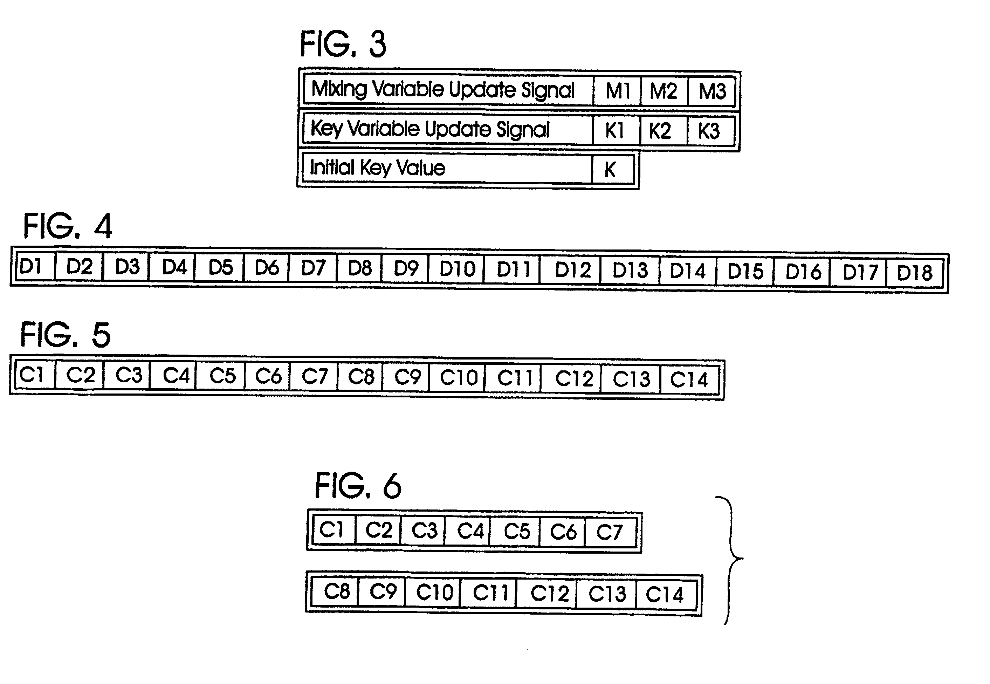

A walk through example of the preferred embodiment of the present invention will be shown by using Figures 3 through 9. These figures will disclose a three bit variable for mixing, and a three bit variable for updating the key. While this system discloses using a three bit mixing variable and a three bit key updating variable, it is envisioned that any size mixing update code or key update code could be used, and that different size mixing and key variables could be used. Additionally, the present invention is not meant to be limited by the data compression or partitioning method used in the present example, because the wide variation in data compression systems and partitioning systems allow for many possible implementations of the present invention. It is also envisioned that the data partitions do not necessarily have to be equal in size as disclosed in the present description. Additionally, the partitioning of the data stream may also be accomplished by enabling the system to detect a signal of the proper size for transmission, or physically constructing the system to send data in discrete partitions. Furthermore, it is envisioned that the order of steps between the initial data stream and the final encoded transmission can be varied to increase the difficulty of decoding a transmission.

As shown in Figure 3 of the drawings, an initial mixing variable, an initial key variable, and an initial base key are supplied to both the transmitting and receiving computers.

As shown in Figure 4 of the drawings, a data stream D1-D18 is desired to be sent from one computer to another. In order to reduce the amount of information that has to be sent, the initial data stream shown in Figure 4 will be run through a standard compressorsuch as PK zip®. The result of this data compression is shown as C1 through C 14 in Figure 5. The compressed data is then partitioned into individual information signals. Examples of 7-bit information signals which have been partitioned away from the compressed data stream shown in Figure 5, are represented as Cl through C7, and C8 through C14 as shown in Figure 6. Note that the data partitions do not have to be equal in size. Additionally, there can be multiple data partitions and the invention is not limited to the two data partitions shown in this example. Ideally, for large information signals , the data partitions will be designed to optimize the size of information signal partition that is to be transmitted. This optimization may also consider the speed at which the system can sequentially process each of these partitions to maintain a constant information flow.

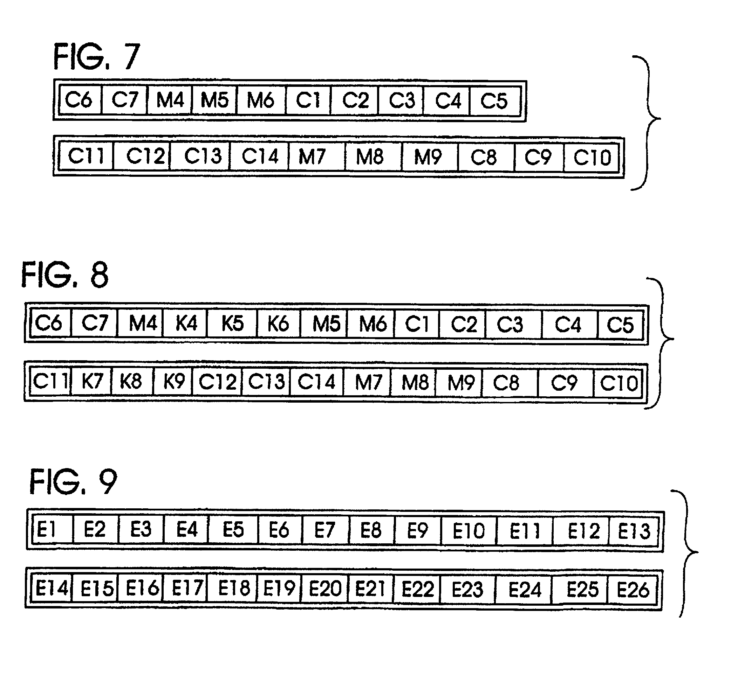

In order to further code or confuse the information that is being transmitted, the information is mixed according to a variable M. As shown in Figure 7, the initial value for M, represented by M1, M2 and M3, was used to split and mix the first element of the partitioned compressed data stream shown in Figure 4. M1, M2 and M3 tell how the first data signal was split and rearranged, and also indicates where to find the next mixing signal M4, M5 and M6 in the information packet currently being transmitted. Thus, M1, M2 and M3 will provide information on how to decode the mixing of C1 through C7 and where to locate the next mixing variable M4, M5 and M6. Similarly, M4, M5 and M6 will provide this information for the next data partition which includes M7, M8 and M9. In this manner, a continuously updated mixing variable can be transmitted.

As shown in Figure 8, once the signal has been compressed, partitioned and mixed, a key variable will also be added to the signal. This key variable will be inserted in a pseudo randomly updated position inside the information being transmitted according to the previous key value. As shown in Figure 8, the initial value K1, K2 and K3 will provide key variable updating information, as well as the location of the key K4, K5 and K6 for the first message being sent. Then, K4, K5 and K6 will provide this information for K7, K8 and K9.
In this manner, an additional method for scrambling the information is provided, and the transmitted key variable provides a way to constantly update the encrypting keys.

Figure 9 shows the final information signal that is transmitted. In this figure, it may be seen that the initial key value K plus the initial variable K1, K2, and K3 is used to encrypt the first message signal that will be sent. Once this first information signal has been decrypted on the other end of the transmission, the secondary K value, K4, K5, and K6 will be removed from the message and stored for decrypting the next message. The system will then find the location of M4, M5 and M6 according to the initial value M1, M2, and M3 which was provided to the system. M4, M5 and M6 will be removed from the message and stored to properly de-mix the second signal that is sent. M1, M2 and M3 will then be used to properly reconstruct the first partition of the compressed data stream. The compressed data stream will then be decompressed, and the initial data stream will be ready for processing. The mixing variable and key variable will then be updated with the new updating information that has been transmitted. A similar process will then occur for each signal that is sent. In this manner, a constantly updated key, and mixing variable, are sent along with the original information in a scrambled information transmission which is extremely hard to reconstruct without knowledge of the initial key and mixing values.

### Alternate Embodiments for Mixing

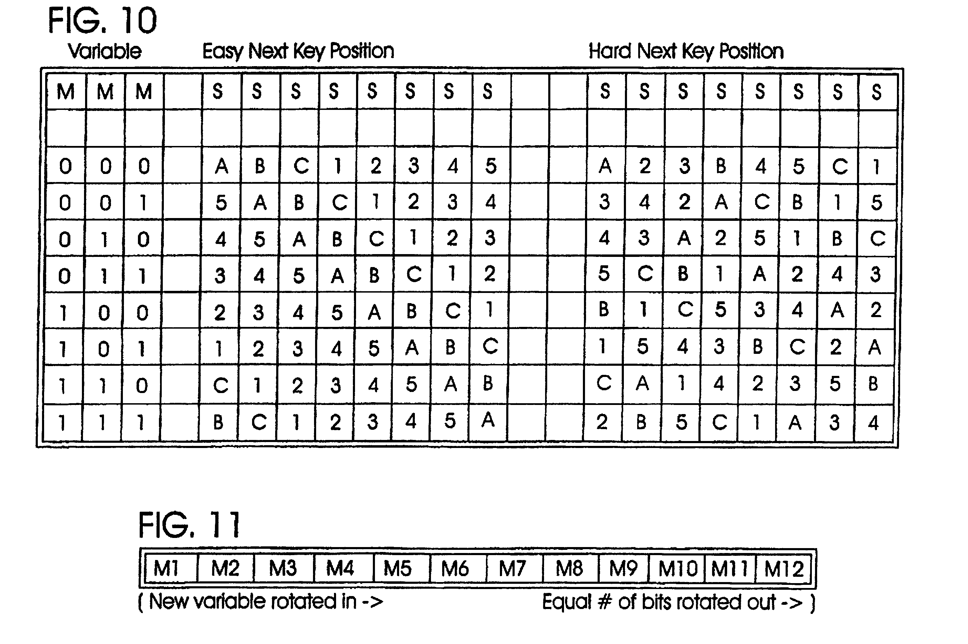

Figure 10 of the drawings shows how a 3-bit mixing variable can be added to a 5-bit signal to create an 8-bit mixed transmission signal. As shown in the first column a 3-bit mixing variable allows for eight different combinations of mixing and positioning the variable with the information to be transmitted. This mixing and insertion of the variable can be done in a simple, synchronous manner as shown by the 'easy next key position' column. In this column the mixing variable is sequentially placed in a position corresponding to the rise in the numeric value of the mixing variable. This method allows for easy encoding and decoding of information by using the mixing variable. However, an extremely complicated mixing arrangement can be constructed by using a random bit positioning mixing system as shown in the 'hard next key position' column. In this column it may be seen that bits of the signal and the mixing variable can be placed in non-synchronous positions and intermixed with each other to confuse the information that is being transmitted. By constructing the mixing encoding and decoding systems in this manner, an extremely complicated mixing system may be used with a simple mixing variable.

As shown by the 3-bit mixing variable and 5-bit transmission, there is a possibility of approximately forty-thousand different combination arrangements for the 8-bit information signal being transmitted. Thus, all of these combinations would be lost if only a single decrypting scheme were to be used. Therefore, it is also envisioned that multiple decryption methods may be used by creating a large mixing variable from the previous small mixing variables that have been sent. An example of a simple left rotation combination of previous mixing variable transmission is shown in Figure 11. In this figure it is shown that as each information signal is received, the 3-bit mixing variable is rotated into the overall mixing variable value. In this manner, it is seen that multiple mixing variable values can be constructed from a simple one bit or multiple bit mixing variable that is transmitted with the information. In this manner it is seen that extremely complex mixing values and decryption charts can be constructed from very small individual signal mixing variables that are transmitted within each signal.

Note also that the same type of larger overall value could be constructed from the key variable values as well.

An example of the method for properly encrypting a signal according to this method, is shown in the following description:

First, initial variables are given to both the transmitting and receiving computers. These variables are then stored for later use. Then, an information signal is sent to the transmitting system. The information signal is then compressed to create a compressed information signal. Then, this compressed information signal is partitioned and the first partition is mixed. The variable for the mixing of the second partition of the signal is stored in the first partition. In addition, a key variable for constantly updating the key for decrypting the next message is also stored in the first partition. The first information partition is then encrypted. Thus, the information stream is compressed, partitioned, mixed, and both mixing and key information is added before the signal is encrypted with the initial encrypting key. The information is then transmitted to the receiving computer. The information is then decrypted at the receiving compiler using the initial information. The subsequent transmission key variable is removed from the first signal and replaces the initial key. The first signal is then unmixed, and the subsequent value mixing variable then replaces the initial mixing value to unmix the next signal. Then the first partition is reconstructed to a data stream, and decompressed to recreate the initial data stream that was intended to be sent.

A similar process then follows for each signal that is sent. Thus, an improved method of transmitting signals with present encryption technology is presented.

It is envisioned that alternative arrangements of these processes would also provide the modified encoding arrangement of the present invention. Therefore, alternative embodiments that rearrange the order of the steps of the present invention are also considered to be a part of the scope and spirit of this invention. Thus, the present invention is not limited to performing these steps in the order listed in the specification.

While the foregoing detailed description has described several embodiments of the encoding and decoding methods of the present invention, it is to be understood that the above description is illustrated only and not limiting of the disclosed invention.

The claims and the specification describe the invention presented and the terms that are employed in the claims draw their meaning from the use of such terms in the specification. The same terms employed in the prior art may be broader in meaning than specifically employed herein. Whenever there is a question between the broader definition of such terms used in the prior art and the more specific use of the terms herein, the more specific meaning is meant.

While the invention has been described with a certain degree of particularity, it is manifest that many changes may be made in the details of construction and the arrangement of components without departing from the spirit and scope of this disclosure. It is understood that the invention is not limited to the embodiments set forth herein for purposes of exemplification, but is to be limited only by the scope of the attached claim or claims, including the full range of equivalency to which each element thereof is entitled.

## Claims

1. A method for encrypting information, comprising:
obtaining an initial data stream;
partitioning said initial data stream; and
mixing said initial data stream according to a mixing variable.

2. The method of claim 1, further comprising:
inserting a mixing update code into said initial data stream; and
updating said mixing variable with said mixing update code.

3. A method for encrypting information, comprising:
obtaining an initial data stream;
partitioning said initial data stream; and
encrypting said initial data stream according to said key variable.

4. The method of claim 3, further comprising:
inserting a key update code into said initial data stream; and
updating said key variable with said key update code.

5. The method of claim 1, further comprising:
encrypting said initial data stream according to said key variable.

6. The method of claim 2, further comprising:
encrypting said initial data stream according to said key variable;
inserting a key update code into said initial data stream;
updating said key variable with said key update code.

7. The method of claim 1, further comprising:
compressing said initial data stream.

8. The method of claim 2, further comprising:
compressing said initial data stream.

9. The method of claim 3, further comprising:
compressing said initial data stream.

10. The method of claim 4, further comprising:
compressing said initial data stream.

11. The method of claim 5, further comprising:
compressing said initial data stream.

12. The method of claim 6, further comprising:
compressing said initial data stream.

13. A method for decrypting information, comprising:
obtaining at least one transmitted partition;
departitioning said transmitted partition; and
decrypting said transmitted partition using a key variable.

14. The method of claim 13, further comprising:
removing a key update code from said transmitted partition; and
updating said key variable with said key update code.

15. A method for decrypting information, comprising:
obtaining at least one transmitted partition;
departitioning said transmitted partition; and
demixing said initial data stream according to a mixing variable.

16. The method of claim 15, further comprising:
removing a mixing update code from said transmitted partition; and
updating said mixing variable with said mixing update code.

17. The method of claim 13, further comprising:
demixing said initial data stream according to a mixing variable.

18. The method of claim 14, further comprising:
demixing said initial data stream according to a mixing variable;
removing a mixing update code from said transmitted partition; and
updating said mixing variable with said mixing update code.

19. The method of claim 13, further comprising:
decompressing said transmitted partition.

20. The method of claim 14, further comprising:
decompressing said transmitted partition.

21. The method of claim 15, further comprising:
decompressing said transmitted partition.

22. The method of claim 16, further comprising:
decompressing said transmitted partition.

23. The method of claim 17, further comprising:
decompressing said transmitted partition.

24. The method of claim 18, further comprising:
decompressing said transmitted partition.
